## Europäisches Patentamt

## European Patent Office

## Office européen des brevets

(19)

(11) Veröffentlichungsnummer: **0 019 900**
**A1**

(12)

# EUROPÄISCHE PATENTANMELDUNG

(21) Anmeldenummer: **80102948.9**

(22) Anmeldetag: **27.05.80**

(51) Int. Cl.³: **E 04 C 1/08**
**// E04B2/54**

(30) Priorität: **25.05.79 DE 2921113**

(43) Veröffentlichungstag der Anmeldung: **10.12.80**
**Patentblatt 80/25**

(84) Benannte Vertragsstaaten: **BE CH DE FR GB LI NL**

(71) Anmelder: **Mumm, Hans, Hüttenkamp 7,**
**D-2350 Neumünster 2 (DE)**

(72) Erfinder: **Mumm, Hans, Hüttenkamp 7,**
**D-2350 Neumünster 2 (DE)**

(74) Vertreter: **Heldt, Gert, Dr. Dipl.-Ing., Neuer Wall 57,**
**D-2000 Hamburg 36 (DE)**

(54) Schalungsstein.

(57) Ein Schalungsstein mit einem von Wandungen (3, 4, 5, 6) umschlossenen Hohlraum ist für die Aufnahme von Vergußmasse, beispielsweise Beton vorgesehen. Von den Wandungen sind mindestens zwei mit einer Ausnehmung versehen, in die ein Bewehrungseisen (70, 71) eingelegt wird. Diese Ausnehmung ist an mindestens je einer Kante der Wandungen angebracht, die einem auf anderem Höhenniveau liegenden Nachbarstein zugewandt ist. Der Querschnitt der Ausnehmung ist so ausgebildet, daß er die Lagerung der Bewehrungseisen an einer bestimmten Stelle begünstigt. Beispielsweise kann die Ausnehmung einen etwa wellenförmigen Querschnitt aufweisen und die Bewehrungseisen in den Wellentälern verlaufen.

Schalungsstein

Die Erfindung betrifft einen Schalungsstein mit einem
für die Aufnahme von Vergußmasse vorgesehenen Hohlraum, der von Wandungen umschlossen ist, von denen mindestens zwei an mindestens je einer der einem auf anderem Höhenniveau liegenden Nachbarstein zugewandten
Kanten mit einer mindestens ein Bewehrungseisen aufnehmenden Ausnehmung versehen sind.

Derartige Schalungssteine haben sich in der Praxis gut
bewährt. Ihre Verarbeitung verbilligt die mit ihrer
Hilfe errichteten Bauwerke erheblich, Die Bewehrungseisen können ohne Schwierigkeiten in die Ausnehmungen
eingelegt und mit den Steinen vergossen werden.

Lediglich in den Fällen, in denen die Bewehrungseisen
bezüglich des Steinkörpers in besonderer Art verlegt
werden müssen, hat sich herausgestellt, daß die Fixierung der Bewehrungseisen bezüglich des Steinkörpers
gewisse Schwierigkeiten bereitet, da diese beim Schütten des Betons in die unterste nur mögliche Lage gleiten, so daß eine Verteilung der Eisen über den Querschnitt der Ausnehmung nur sehr schwer möglich ist.

Aufgabe der vorliegenden Erfindung ist es daher, den
Stein der einleitend genannten Art so zu verbessern,
daß die Bewehrungseisen verschiedene Lagen gegenüber dem Steinkörper einnehmen können. Diese Aufgabe wird erfindungsgemäß dadurch gelöst, daß die Ausnehmung einen die Lagerung der Bewehrungseisen begünstigenden Querschnitt aufweist.

Mit Hilfe dieser Ausnehmungen kann die Lage der Bewehrungseisen bezüglich des Steinkörpers so bestimmt werden, daß das Bewehrungseisen die höchstmögliche Festigkeit in den gesamten Mauerverbund bringt. Es ist sichergestellt, daß die Bewehrungseisen durch das Einschütten des Betons nicht in ihrer Lage verrutschen, sondern in der einmal festgelegten Lage verbleiben, die der Berechnung der Konstruktion zugrunde liegt. Darüber hinaus kann die Zuordnung der Ausnehmungen so erfolgen, daß die Bewehrungseisen unter weitestgehender Schonung ihres Gefüges verlegt werden können.

Ein derartiger Vorteil ergibt sich insbesondere bei Abwinkelungen der Bewehrungseisen. Durch richtige Wahl und Anordnung der Ausnehmungen können die Bewehrungseisen in Bahnen verlegt werden, die ausschließen, daß durch ein zu enges Abknicken Strukturveränderungen herbeigeführt werden, die die Festigkeit der Eisen erheblich herabsetzen können.

Gemäß einer bevorzugten Ausführungsform der Erfindung weisen die Ausnehmungen einen etwa wellenförmigen Querschnitt auf und die Bewehrungseisen verlaufen in den Wellentälern. Diese Wellenlinie ermöglicht die Verlegung der Bewehrungseisen an einer Stelle, die den Wandungen des Schalungssteines relativ nahe kommt. Sie verstärken auf diese Weise das Gefüge des Schalungssteines. Außerdem ist die Mulde, in der das Bewehrungseisen liegen soll, mit einem relativ kleinen Radius ausgebildet, so daß dieser eine Verschiebung der Bewehrungseisen in ihrer Mulde ausschließt. Trotzdem verhindert die Ausbildung des Querschnitts als Wellenlinie das Auftreten von Spannungsspitzen, da scharfkantige Ecken und Spitzen nicht vorhanden sind. Je nach dem statischen Erfordernis können auf diese Weise die Bewehrungseisen mit Sicherheit außerhalb der neutralen Phase verlegt werden, in der sie zur Festigkeit des Mauerwerks nicht beitragen. Es ist auch gewährleistet, daß sie durch das Einschütten des Betons innerhalb des Schalungssteins nicht so verrutschen, daß sie anschließend in der neutralen Phase liegen, sondern in der Lage in das Mauerwerk integriert werden, die in der statischen Berechnung angenommen wurde.

Darüber hinaus hatte sich herausgestellt, daß das stumpfe Zusammenfügen zweier auf einer Ebene nebeneinander liegender Schalungssteine eine erhöhte Sorgfalt dessen erfordert, der den Mauerverbund errichtet. Dabei konnten die Anschlußstellen gegeneinander verschoben werden, so daß nebeneinanderliegende Mauersteine nicht in einer Flucht liegen. Dadurch ergaben sich Unebenheiten in dem von den Schalungssteinen gebildeten Wandgefüge, wenn nicht mit der genügenden Sorgfalt gearbeitet wurde.

Eine weitere Aufgabe der vorliegenden Erfindung ist es daher, den eingangs genannten Mauerstein so zu verbessern, daß sich mit seiner Hilfe ein exakt aufgeführtes Mauerwerk mit geraden Oberflächen herstellen läßt.

Diese Aufgabe wird erfindungsgemäß dadurch gelöst, daß einem auf gleichen Höhenniveau liegenden Nachbarstein mindestens zwei Anschlußkanten benachbart sind, die ein die Ausrichtung und Verbindung begünstigendes Profil aufweisen.

Die Profile der Anschlußkanten sind so ausgebildet, daß die Profile zweier nebeneinander liegender Steine so ineinandergreifen, daß Verschiebungen der beiden Steine gegeneinander nicht möglich sind. Auf diese Weise wird erreicht, daß die nebeneinander liegenden Steine exakt ausgerichtet sind. Abweichungen aus der Flucht können auch bei der Aneinanderreihung vieler Steine nicht auftreten.

Darüber hinaus hatte sich herausgestellt, daß die bisher benutzten Schalungssteine innere Hohlräume aufwiesen, die sich zwar gut auffüllen ließen, die aber bei ihrer Herstellung eine relativ hohe Sorgfalt erforderten.

Eine weitere Aufgabe der vorliegenden Erfindung besteht also darin, eine für die Herstellung günstige Hohlraumgestaltung vorzuschlagen.

Diese Aufgabe wird erfindungsgemäß dadurch gelöst, daß der Hohlraum einen etwa kreisförmigen Querschnitt aufweist.

Diese Hohlraumgestaltung hat den Vorteil, daß die Schalungssteine sich leicht und billig herstellen lassen. Darüber hinaus läßt sich der Hohlraum mit kreisförmigem Querschnitt besonders günstig mit der Vergußmasse, beispielsweise Beton ausfüllen, ohne daß befürchtet werden muß, daß Hohlräume im Beton entstehen. Schließlich wird durch den kreisförmigen Querschnitt vermieden, daß im Steinkörper Rißbildungen auftreten, die bei der Verarbeitung der Steine deren Zerstörung herbeiführen können und den Mauerverbund gefährden. Schließlich hat der kreisförmige Querschnitt auch beim Versand der Steine Vorteile, da die Steine zum Stapeln gut ausgeprägte Unterstützungsflächen aufweisen. Schließlich ist es möglich, mit Hilfe der kreisförmigen Hohlräume ein etwa monolithisches Mauerwerk zu schaffen. In den untereinander angeordneten Schalungssteinen entstehen durch die sich von Stein zu Stein aneinanderreihenden Hohlräume Röhren, die sich senkrecht durch den gesamten Mauerverbund erstrecken. Dabei spielt es keine Rolle, ob die einzelnen Schalungssteine unmittelbar oder im Verband aufeinanderstehen, da der Abstand der Mittelpunkt nebeneinanderliegender Hohlräume immer gleich groß ist. Auf diese Weise ist gewährleistet, daß dem kreisförmigen Hohlraum des untenliegenden Steines sich ein kreisförmiger Hohlraum anschließt, der sich aus zwei Hohlraumhälften zusammensetzt, die zu entsprechend nebeneinanderliegenden Steinen gehören. Dabei ist davon auszugehen, daß durch das Nut- und Feder-System der Anschlußkanten die beiden Hohlraumhälften nebeneinanderliegender Steine so gut zueinander ausgerichtet sind, daß der von ihnen ausgebildete Hohlraum genau mit dem des unter ihm liegenden Schalungssteins fluchtet. Es entstehen in der Röhre also keine scharfkantigen Unebenheiten an den Stoßstellen, die sich zwischen mehreren Steinen ausbilden. Die in diesem Hohlraum erhärtende Betonsäule hat eine völlig glatte Oberfläche, so daß die zu übertragenden Spannungen ohne Schwierigkeiten in gleichmäßig verlaufenden Linien übertragen werden können.

Weitere Einzelheiten der Erfindung ergeben sich aus der nachfolgenden ausführlichen Beschreibung und den beigefügten Zeichnungen, in denen eine bevorzugte Ausführungsform der Erfindung beispielsweise veranschaulicht ist.

In den Zeichnungen zeigen:

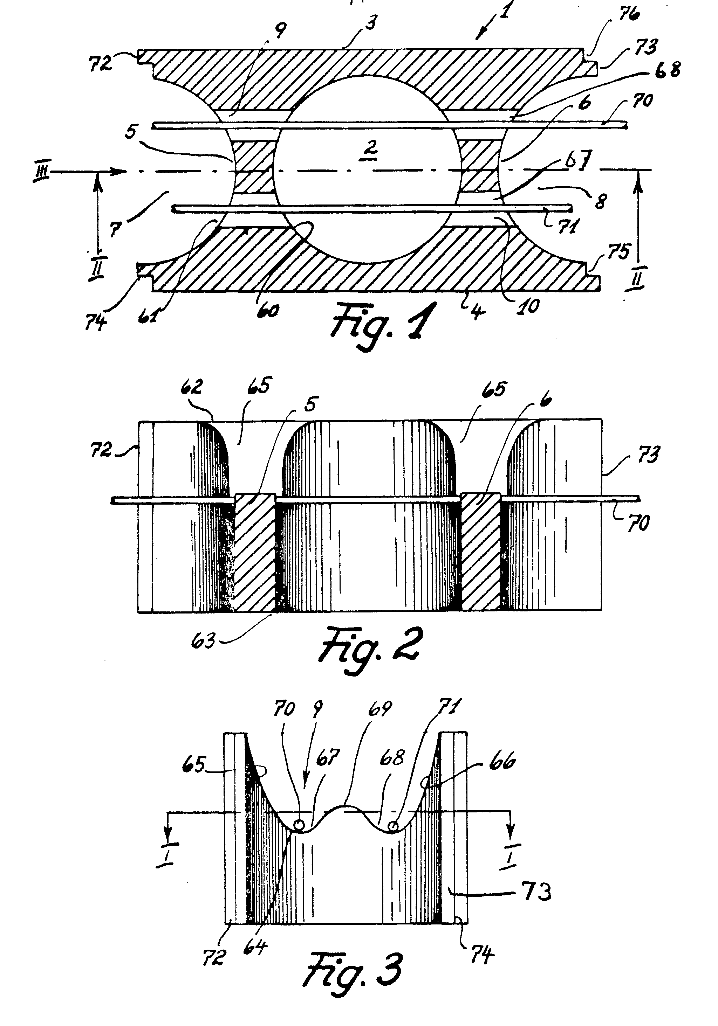

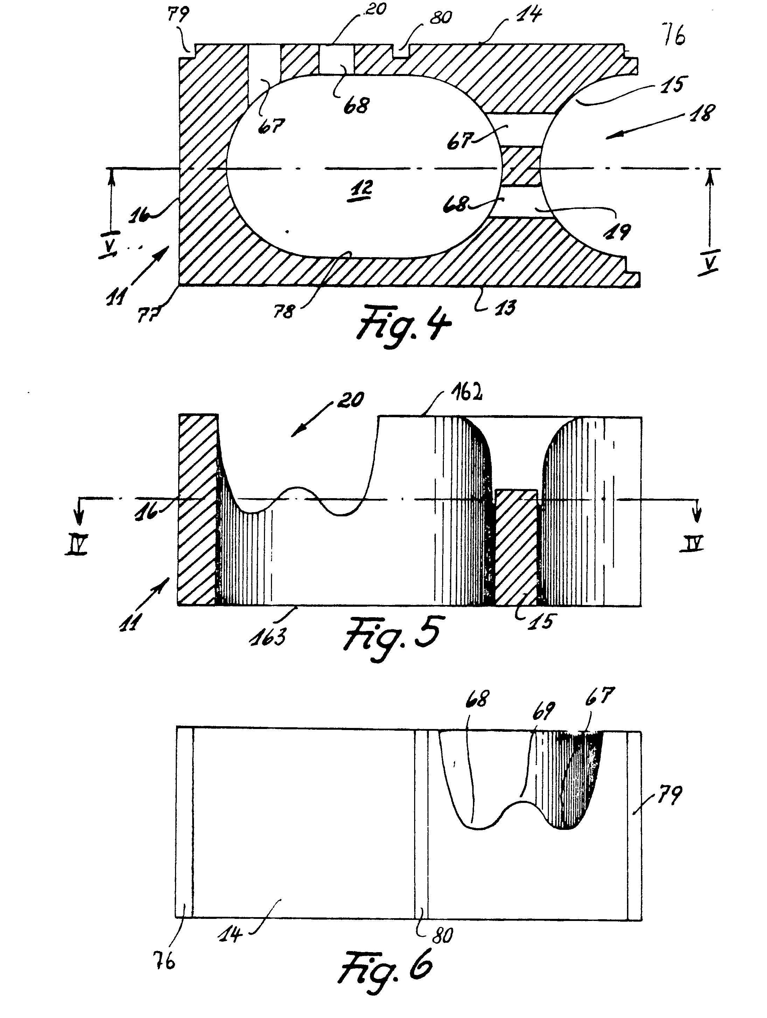

Figur 1: einen Querschnitt durch einen Mauerstein entsprechend der Schnittlinie I-I in Figur 3,

Figur  2: einen Schnitt durch einen Mauerstein entsprechend der Schnittlinie II-II in Figur 1,

Figur  3: eine Ansicht auf eine der Stirnflächen des Mauersteines,

Figur  4: einen Schnitt durch einen zur Ausbildung von Ecken besonders geeigneten Eckstein entsprechend der Schnittlinie IV-IV in Figur 5,

Figur  5: einen Schnitt durch einen Eckstein entsprechend der Schnittlinie V-V in Figur 4,

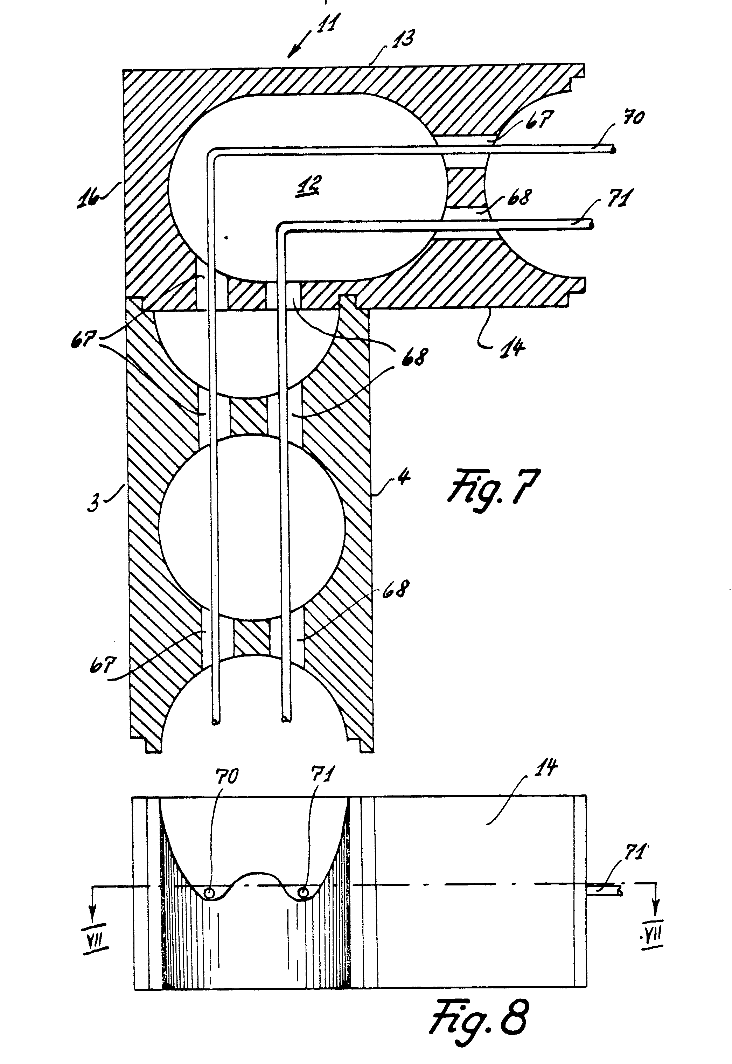

Figur  6: eine Ansicht auf eine Längsseite eines Ecksteins,

Figur  7: einen Schnitt durch einen Verbund eines Ecksteins mit einem Mittelstein gemäß der Schnittlinie VII-VII in Figur 8,

Figur  8: eine Seitenansicht eines Eckverbundes,

Figur  9: einen Schnitt durch einen gekrümmten Mittelstein entlang der Schnittlinie IX-IX in Figur 10,

Figur 10: eine Seitenansicht in Richtung des Pfeiles X in Figur 9,

Figur 11: eine Ansicht auf die Stirnflächen zweier untereinander liegender Mittelsteine.

Ein Mittelschalungsstein 1 besteht im wesentlichen aus zwei einander in etwa parallel verlaufenden Seitenwänden 3, 4 und zwei in ihrer Hauptrichtung senkrecht dazu verlaufenden Stirnwänden 5, 6, die gemeinsam mit den Seitenwänden 3, 4 einen Hohlraum 2 einschließen. Der Hohlraum 2 hat einen im wesentlichen kreisförmigen Querschnitt. Die Querschnitte der Stirnwände 5, 6 sind im wesentlichen Xförmig ausgestaltet, wobei der eine der beiden Schenkel des X einer den Hohlraum 2 begrenzenden Innenwand 60 entspricht, während der andere Schenkel von einer Außenwandung 61 gebildet wird, die einen offenen Hohlraum 7, 8 begrenzt. Je einer dieser offenen Hohlräume 7, 8 ist beidseits des Mittelschalungssteines 1 einem entsprechenden offenen Hohlraum 7 eines anderen Mittelschalungssteines zugewendet. Je einer dieser Mittelschalungssteine schließt sich in einem Mauerverbund beidseits des Mittelschalungssteines 1 an diesen auf einer Ebene des Mauerverbundes an.

In den beiden Stirnwänden 5, 6 sind Ausnehmungen 9, 10 vorgesehen. Diese erstrecken sich an einer Oberkante 62 des Schalungssteines 1 im Bereich der Stirnwände 5, 6. Es ist auch möglich, die Ausnehmung 9, 10 an einer Unterkante 63 der Stirnwände 3, 4 anzubringen.

Der Querschnitt der Ausnehmung 9, 10 ist wellenförmig. Seine den Stirnwänden 5, 6 zugewandte untere Begrenzung 64 ist wellenförmig ausgebildet. Die von der unteren Begrenzung 64 ausgebildete Wellenlinie hat zwei relativ steil verlaufende Außenbereiche 65, 66, die jeweils nach Durchmessen von Wellentälern 67, 68 sich auf einem gemeinsamen Wellenkamm 69 treffen. Statt der Anordnung eines Wellenkamms 69 ist es möglich, zwischen den Außenbereichen 65 und 66 mehrere Wellenkämme vorzusehen, um mehreren nebeneinanderliegende Wellentäler zu erzeugen.

Durch die Wellentäler 67, 68 erstrecken sich Bewehrungseisen 70, 71. Diese dienen dazu, eine hohe Festigkeit des herzustellenden Mauerwerkes zu schaffen. Je nach der Bemessung der Bewehrungseisen 70, 71 können sich je eins der Bewehrungseisen 70, 71 oder mehrere dieser Bewehrungseisen durch eins der Wellentäler 67, 68 erstrecken. Dabei kommt es nicht nur auf die Gesamtheit der innerhalb des Mauerwerkes zu übertragenden Kräfte an, sondern auch darauf, wo sie im Mauerwerk auftreten und wie sie verteilt sind. Entsprechend müssen die Bewehrungseisen 70, 71 über den Querschnitt der Ausnehmung 9, 10 verteilt werden. Die Kräfte werden weitgehend gleichmäßig über die gesamte Breite eines Schalungssteines verteilt, wenn sich mehrere parallel zueinander verlaufende Bewehrungseisen 70, 71 auf einer Ebene des Mauerverbundes durch diesen erstrecken. Eine Anordnung mehrerer einander parallel verlaufender Bewehrungseisen 70, 71 erfolgt zweckmäßigerweise dadurch, daß eine entsprechende Anzahl von Wellentälern 67, 68 nebeneinander im Querschnitt der Ausnehmung 9, 10 angeordnet werden.

An seinen beiden sich einander gegenüberliegenden Enden ist der Schalungsstein mit Anschlußkanten 72, 73 versehen, die dem Anschluß des Steines an einen im Mauerverbund neben ihm auf gleicher Ebene liegenden Stein dienen. Diese Anschlußkanten 72, 73 verlaufen im wesentlichen vertikal und parallel zu den Seitenwänden 3, 4. Diese Anschlußkanten 72, 73 sind mit Profilen 74, 75 versehen, die dazu dienen, nebeneinander im Mauerverbund liegende Steine gegeneinander so auszurichten, daß ihre gemeinsamen Seitenwände 3, 4 glatte Wände bilden, die sowohl in horizontaler als auch in vertikaler Richtung entsprechend den Zeichnungen ausgerichtet sind, nach denen das Mauerwerk errichtet werden soll. Diese Diese Profile 74, 75 sind als eine Nut und Federverbindung ausgebildet. Als Nut ist ein sich über die gesamte Höhe des Steines erstreckender Rezeß 76 ausgebildet, der gegenüber den Anschlußkanten 72, 73 zurückspringt und im Steinkörper parallel zu den Anschlußkanten 72, 73 verläuft. Die Feder bildet der restliche Teil der Anschlußkanten 72, 73, der mithin gegenüber dem Rezeß 76 hervorspringt in Richtung auf einen dem Schalungsstein 1 benachbarten Nachbarstein. Die Anschlußkante ragt nach dem Zusammenfügen zweier nebeneinander liegender Steine in die Rezesse 76 des Nachbarsteines hinein. Durch dieses Nut- und Federsystem wird erreicht, daß die Schalungssteine nur im Sinne dieser Verbindung zusammengefügt werden können, so daß eine falsche Zusammenfügung nebeneinander liegender Steine praktisch ausgeschlossen ist und auch beim Einfüllen des Betons zwei nebeneinander liegende Steine nicht voneinander abgedrückt oder in ihrer gegenseitigen Lage zueinander verändert werden können.

Die Rezesse 76 sind auf jeder der beiden Seiten des Schalungssteines 1 gleichsinnig bezüglich einer gedachten Mittellinie angeordnet, die parallel zu den Anschlußkanten 72, 73 verläuft und diese in einander gleich breite Hälften unterteilt. Die als Nut ausgebildete Hälfte der jeweiligen Anschlußkanten 72, 73 verläuft bei einer Draufsicht auf die Stirnwände 5, 6 jeweils rechts dieser Mittellinie.

Zum Auffüllen eines Mauerwerkes werden mehrere Schalungssteine 1 nebeneinander auf einer Ebene angeordnet. Sie werden gegeneinander so ausgerichtet, daß ein Schalungsstein 1 mit den als Feder ausgebildeten Teilen ihrer Anschlußkanten 72, 73 in die ihnen entsprechenden als Nuten ausgebildeten Rezesse /6 hineinragen. Sodann werden die Bewehrungseisen 70, 71 in den Wellentälern 67, 68 der Ausnehmungen 9, 10 verlegt. In diesen Wellentälern 67, 68 nehmen die Bewehrungseisen 70, 71 eine relativ stabile Lage ein, aus der sie auch nach dem Einfüllen von Beton oder anderen Vergußmassen nicht herausgedrückt werden. Sodann wird der die Schalungssteine ausfüllende Beton in die Hohlräume 2 eingegossen. Dieser steigt in den Hohlräumen 2 auf. Dabei sind die Hohlräume 2 in gleichen Abständen nebeneinander angeordnet, da sich dem im Schalungsstein 1 angeordnetem Hohlraum 2 zu beiden Seiten je ein Hohlraum anschließt, der sich zusammensetzt aus den offenen Hohlräumen 7, 8 und dem Schalungsstein 1 zugewandten offenen Hohlräumen der Nachbarsteine.

Der Beton wird so lange in den von den Schalungssteinen 1 gebildeten Mauerverbund eingefüllt, bis dieser bis an die Oberkante 62 der obersten Reihe von Schalungssteinen reicht. Dabei umgibt der Beton gleichmäßig die im Mauerverbund liegenden Bewehrungseisen 70, 71. Zur Ausbildung von Ecken wird mit den Schalungssteinen ein Eckverband im Mauerwerk ausgebildet. Zu diesem Zwecke ist ein Eckschalungsstein 11 vorgesehen, von dem nur eine Stirnwand 15 mit einem offenen Hohlraum 18 versehen ist. Die andere Stirnwand bildet mit einer Seitenwand 13 eine nach außen weisende Ecke 77 aus.

Die der Seitenwand 13 gegenüberliegende Seitenwand 14 ist mit einer Ausnehmung 20 versehen. Von den Seitenwänden 13, 14 und den Stirnwänden 15, 16 ist ein Hohlraum 12 umschlossen, der sich in vertikaler Richtung durch den Schalungsstein 1 erstreckt und dessen Wandungen in etwa parallel zu den Wänden 13, 14, 15, 16 des Schalungssteines 1 verlaufen. Der Querschnitt des Hohlraumes ist kreisförmig gestaltet. Dabei sind die den beiden Stirnwänden 15, 16 benachbarten Wandungsteile des Hohlraumes 12 kreiszylindrisch gewölbt. Je nach der Länge des Eckschalungssteines 11 kann zwischen diesen kreiszylindrisch geformten Endteilen des Hohlraumes 12 ein im Sinne der Längserstreckung des Eckschalungssteines gestreckter Mittelteil 78 angeordnet sein, damit die Länge des Hohlraumes der Länge des Eckschalungssteines 11 angepaßt ist.

Außer der in der Seitenwand 14 vorgesehenen Ausnehmung 20 ist auch eine Ausnehmung 19 in der Stirnwand 15 vorgesehen. Beide Ausnehmungen sind an den Oberkanten 162 des Eckschalungssteines 11 angebracht, können aber ebensogut auch an dessen Unterkante 163 vorgesehen sein. In diesem Fall müssen die Bewehrungseisen 70, 71 beim Aufrichten der Wand zunächst auf einer unteren Lage von Schalungssteinen verlegt werden. Sodann wird eine weitere Lage von Schalungssteinen 1, 11 mit den entsprechenden Ausnehmungen 9, 10, 19, 20 über diese bereits verlegten Bewehrungseisen 70, 71 gesetzt.

Die Ausnehmungen 19, 20 sind ähnlich wie diejenigen des Mittelschalungssteines wellenförmig ausgebildet. Die Stirnwand 15 ist ähnlich wie die Stirnwände 5, 6 mit Profilen zum Anschluß anderer Schalungssteine ausgestattet. In der Seitenwand 14 sind lediglich Nuten 79, 80 vorgesehen, die sich von oben bis unten über die Seitenwand 14 erstrecken und in die der als Feder ausgebildete Teil der Anschlußkanten 72, 73 hineinragt.

In Figur 7 ist eine Eckverbindung dargestellt. Die Bewehrungseisen 70, 71 sind im Hohlraum 12 des Eckschalungssteines 11 abgewinkelt. Falls für die Bewehrung des Mauerwerks nur ein Bewehrungseisen 70 ausreicht, kann dieser entweder nur in den den äußeren Seiten bzw. Stirnwänden 13, 16, 3 benachbarten Wellentälern 67 oder in den den Innenwandungen 14, 4 benachbarten Wellentälern 68 geführt werden. Es ist aber auch möglich, im Bereich des Hohlraumes 12 aus statischen Gründen bei der Verwendung nur eines Bewehrungseisens 70 von den den Seitenwandungen 13 benachbarten Wellentälern überzuwechseln in die den Innenwandungen 4 benachbarten Wellentäler 68.

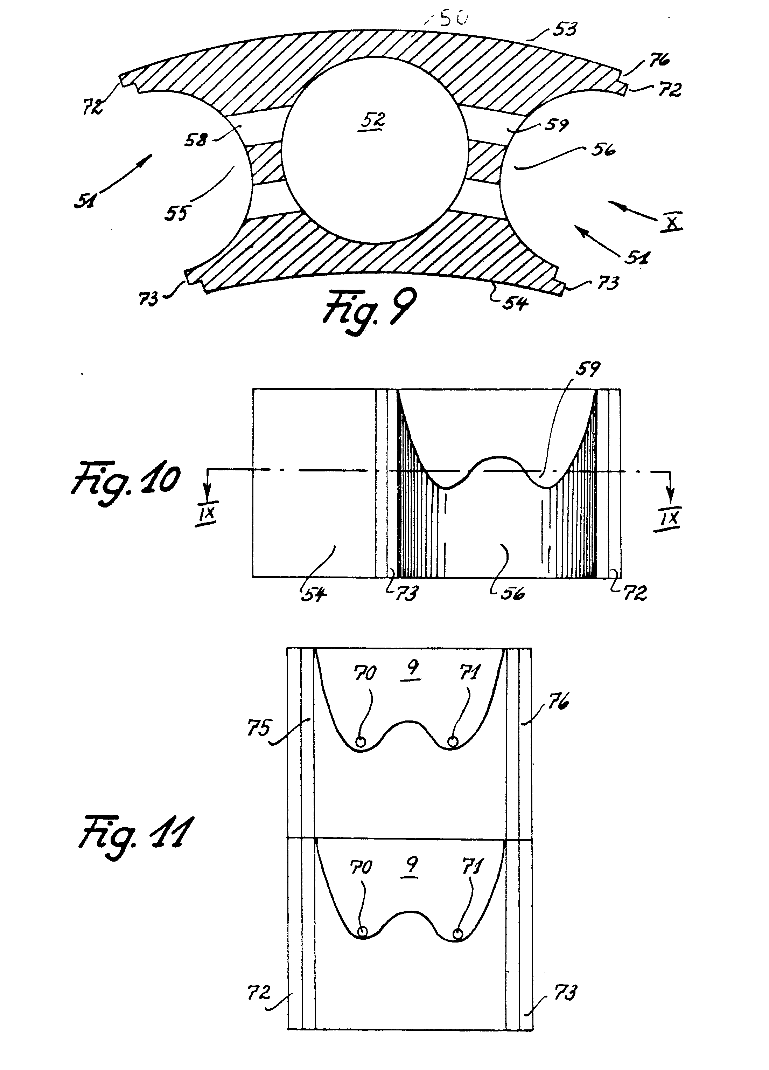

Schließlich kann der Schalungsstein auch noch in gekrümmter Form hergestellt werden, wie er beispielsweise in Figur 9 veranschaulicht ist. Auch hier sind die Anschlußkanten 72, 73 mit Profilen zum Anschluß gerader oder weiterer gekrümmter Schalungssteine 50 versehen. Die Profile sind daher nach denselben Gesichtspunkten wie bei geraden Schalungssteinen gestaltet, und zwar sowohl hinsichtlich der Form der Profile als auch hinsichtlich ihrer Lage. Darüber hinaus ist dieser gekrümmte Schalungsstein auch mit wellenförmigen Ausnehmungen 58, 59 versehen, deren Gestaltung denjenigen der übrigen Schalungssteine 1, 11 entspricht. Schließlich ist der gekrümmte Schalungsstein auch mit einem Hohlraum 52 versehen, dessen Querschnitt kreisförmig ist. Dieser Hohlraum wird von Seitenwänden 53, 54 und Stirnwänden 55, 56 eingeschlossen.

An den beiden Enden des gekrümmten Schalungssteines sind offene Hohlräume 51 vorgesehen, die einen halbkreisförmigen Querschnitt haben und die sich mit den entsprechenden offenen Hohlräumen der übrigen Schalungssteine 1, 11 zu Hohlräumen mit kreisförmigen Querschnitt kombinieren lassen. Die gekrümmten Schalungssteine 50 dienen in erster Linie zur Herstellung von Behältern.

Allen Schalungssteinen 1, 11, 50 ist gemeinsam, daß die Profile der Anschlußkanten 72, 73 verschiedene Gestalt haben können. Die Nuten und Federn können beispielsweise auf andere Weise als durch die Zweiteilung der Anschlußkanten 72, 73 hergestellt werden. Insbesondere ist es denkbar, daß sich eine Feder auf der Mitte der Anschlußkanten 72, 73 erstreckt und in entsprechend gestaltete Nuten des Nachbarsteines hineinragt, so daß Verschiebungen der Steine zueinander nicht möglich sind. Es ist aber auch möglich, die Aufteilung der Anschlußkanten 72, 73 nicht gleichsinnig bezüglich einer gedachten Mittellinie vorzunehmen, sondern so, daß die Rezesse 76 jeweils den Seitenwänden 3, 4, 13, 14, 53, 54 benachbart sind. In diese Rezesse ragen entsprechend gestaltete Anschlußkanten 63, 163 der Nachbarsteine hinein, so daß die beiden Steine nicht gegeneinander verschoben werden können. Der Nachteil dieser Lösung besteht aber darin, daß das eine Ende der Steine mit innenliegenden Rezessen gestaltet werden müssen, während das andere Ende der Steine den Seitenwandungen 3, 4, 13, 14, 53, 54 benachbarte außenliegende Rezesse aufweisen muß.

0019900

<u>Patentansprüche:</u>

1. Schalungsstein mit einem für die Aufnahme von Vergußmasse vorgesehenen Hohlraum, der von Wandungen
   umschlossen ist, von denen mindestens zwei an mindestens je einer der einen auf anderem Höhenniveau liegenden Nachbarstein zugewandten Kanten mit einer mindestens ein Bewehrungseisen aufnehmenden Ausnehmung
   versehen sind, dadurch gekennzeichnet, daß die Ausnehmung (9, 10, 19, 20, 58, 59) einen die Lagerung
   der Bewehrungseisen (70, 71) begünstigenden Querschnitt aufweist.

2. Schalungsstein nach Anspruch 1, dadurch gekennzeichnet, daß die Ausnehmung (9, 10; 19, 20; 58, 59) einen etwa wellenförmigen Querschnitt aufweist und die
   Bewehrungseisen (70, 71) in Wellentälern (67, 68)
   verlaufen.

3. Schalungsstein nach Anspruch 1 und 2, dadurch gekennzeichnet, daß die Ausnehmung (9, 10; 19, 20; 58, 59) in ihrer Stirnwand (5, 6; 15, 16; 55, 56) eine die Verlegung der Bewehrungseisen (70, 71) beeinflussende Lage aufweist.

4. Schalungsstein nach Anspruch 1 bis 3, dadurch gekennzeichnet, daß der Hohlraum (2, 12, 52) einen etwa kreisförmigen Querschnitt aufweist.

5. Schalungsstein nach Anspruch 1 bis 4, dadurch gekennzeichnet, daß einem auf gleichem Höhenniveau liegenden Nachbarstein mindestens zwei Anschlußkanten (72, 73) benachbart sind, die ein die Ausrichtung und Verbindung begünstigendes Profil (74, 75) aufweisen.

6. Schalungsstein nach Anspruch 1 bis 5, dadurch gekennzeichnet, daß das Profil (74, 75) in Form von Nut und Feder ausgebildet ist.

7. Schalungsstein nach Anspruch 1 bis 6, dadurch gekennzeichnet, daß je ein aus Nut und Feder bestehendes Profil (74, 75) an jeder der vier Anschlußkanten (72, 73) ausgebildet ist, die paarweise den Anschluß an die beiden Nachbarsteine bilden.

8. Schalungsstein nach Anspruch 1 bis 7, dadurch gekennzeichnet, daß die Breite der Nuten etwa der Hälfte der Breite der Anschlußkanten (72, 73) entspricht und die andere Hälfte als Feder ausgebildet ist, die in die als Rezeß (76) ausgebildete Nut des Nachbarsteines hineinragt.

9. Schalungsstein nach Anspruch 1 bis 8, dadurch gekennzeichnet, daß die Nuten zweier den gleichen Nachbarsteinen zugewandten Anschlußkanten (72, 73) auf der
gleichen Seite von gedachten Mittellinien liegen,
die die Anschlußkanten (72, 73) in Hälften gleicher
Breite unterteilen.

10. Schalungsstein nach Anspruch 1 bis 8, dadurch gekennzeichnet, daß die Nuten der den Nachbarsteinen benachbarten Anschlußkanten (72, 73) auf der anderen
Seite der gedachten Mittellinie liegen als die Nuten der dem anderen Nachbarstein benachbarten Anschlußkanten.

0019900

Fig. 1

Fig. 2

Fig. 3

0019900

*Fig. 4*

*Fig. 5*

*Fig. 6*

0019900

*Fig. 7*

*Fig. 8*

Fig. 9

Fig. 10

Fig. 11

Europäisches
Patentamt

**EUROPÄISCHER RECHERCHENBERICHT**

0019900
Nummer der Anmeldung

EP 80 10 2948

| Kategorie | Kennzeichnung des Dokuments mit Angabe, soweit erforderlich, der maßgeblichen Teile | betrifft Anspruch | KLASSIFIKATION DER ANMELDUNG (Int.Cl. 4) |
|---|---|---|---|
| | **EINSCHLÄGIGE DOKUMENTE** | | |
| X | FR - A - 2 132 597 (BIHR-POUXEUX)<br><br>* Seite 2, Zeilen 23-29; Seite 3, Zeilen 5-11; 17-19; Figuren 1,3, 5 *<br><br>-- | 1,2,3 | E 04 C 1/08//<br>E 04 B 2/54 |
| | FR - A - 1 122 522 (PAULUS)<br><br>* Seite 1, Spalte 2, Abschnitte 7-8; Figuren *<br><br>-- | 1,3,5,<br>6,7,8,<br>10 | |
| | CH - A - 257 055 (WURMLI)<br><br>* Seite 1, Zeilen 37-49; Seite 2, Zeilen 4-16; Figuren *<br><br>-- | 4,5,6,<br>7,8,10 | **RECHERCHIERTE SACHGEBIETE (Int. Cl. 3)** |
| | DE - A - 1 659 120 (HEHN)<br><br>* Seite 7, letzter Abschnitt - Seite 8, Zeile 5; Figuren 1,2,4,6,8,9, 10 *<br><br>---- | 5,6,7,<br>8,9 | E 04 B |

Der vorliegende Recherchenbericht wurde für alle Patentansprüche erstellt.

| Recherchenort | Abschlußdatum der Recherche | Prüfer |
|---|---|---|
| Den Haag | 29.08.1980 | VANDEVONDELE |

EPA form 1503.1   06.78